# EUROPEAN PATENT APPLICATION

(11) **EP 2 153 924 A2**
(43) Date of publication of application: **17.02.2010**
(21) Application number: 09167154.5
(22) Date of filing: 04.08.2009
(51) Int. Cl.: B23C 3/12

(54) **Milling machine for machining edges, in particular edges of a conductive bar for an alternator stator**

(30) Priority: 05.08.2008 IT TO20080620
(71) Applicant: Ansaldo Energia S.p.A., Genova (IT)
(72) Inventor: Squeri, Bruno, 16133 Genova (IT)
(74) Representative: Jorio, Paolo

(57) **Abstract**

A milling machine (1) for machining edges (16, 17), in particular edges of a conductive bar for an alternator stator, has a structure (18), and a number of bearings (7, 8) defining a guide seat (13) extending along a longitudinal plane (14) and engaged by the bar (3); at least one of the bearings (7) is fitted to a slide (76) that slides, with respect to the structure (18), along an adjustment axis (23) perpendicular to the longitudinal plane (14) of the guide seat (13); a spring (71) pushes the slide (76) in such a direction as to grip the bar (3) inside the guide seat (13); and the structure (18) supports at least one milling cutter (58) that is powered by a motor to mill a longitudinal edge (16) of the bar (3), and is automatically moved by an adjusting assembly (65) in response to translation of the slide (76).

## Description

The present invention relates to a milling machine for machining edges, in particular edges of a conductive bar for an alternator stator.

In the manufacture of conductive bars for alternator stators, the edges of the bars must be radiused to limit the so-called "point effect" of the electric field. Radiusing varies in importance, depending on the type of bar and project. More specifically, a high degree of precision is especially essential in the case of high-voltage alternator bars.

Standard practice is to remove the edge manually, e.g. by filing it to the desired radius of curvature. The result therefore depends on skill, and is rarely satisfactory, in that the wrong tool angle and/or more than the necessary pressure are sufficient to result in error.

Moreover, four passes, i.e. one for each edge, are required, thus making it a long job.

The edges are only filed when a relatively small radius of curvature is required, i.e. when only a small amount of material is to be removed. Otherwise, milling machines are used. Even using currently marketed milling machines, however, the accuracy achievable is still unsatisfactory : the bars are rarely perfectly straight or of perfectly even width, so that the amount of material removed varies by a few tenths of a millimetre along the bar, depending on the profile of the bar.

If too much material is removed, there is a risk of working down to the copper winding of the bar, thus resulting in short-circuit problems and, hence, repair or rejection of the bar.

Patent US4417835 describes a milling machine in accordance with the preamble to Claim 1, and which is used to remove material from a longitudinal edge of a sheet, e.g. a sheet of aluminium.

The milling machine comprises rollers defining a guide seat, into which the longitudinal edge is inserted, and the rollers rest on the opposite faces of the sheet, so that, as it operates, the milling machine is guided by the longitudinal edge being worked.

One of the two rollers is pressed by a spring against the sheet to compensate for any variations in the thickness of the work sheet and so achieve a constant final thickness along the longitudinal edge of the sheet. If the thickness is uneven to start with, the amount of material removed differs along the longitudinal edge of the sheet, thus making the milling machine described in US4417835 unsuitable for machining the edges of conductive bars.

Moreover, the milling machine in US4417835 only works one edge at a time, so the machining time involved is relatively long.

It is an object of the present invention to provide a milling machine for machining edges, in particular edges of a conductive bar for an alternator stator, and designed to provide a straightforward, low-cost solution to the above problems.

According to the present invention, there is provided a milling machine for machining edges, in particular edges of a conductive bar for an alternator stator; the milling machine comprising:
- a structure;
- a plurality of bearings defining a guide seat, which is engaged, in use, by a workpiece and extends along a longitudinal plane;
- a slide, which carries at least one of said bearings and is able to slide with respect to said structure along an adjustment axis orthogonal to said longitudinal plane;
- elastic means for pushing said slide in a direction such as to grip said workpiece in said guide seat along said adjustment axis;
- at least one milling cutter, which is carried by said structure and can be actuated by a motor for machining a longitudinal edge of said workpiece;
the milling machine being characterized by comprising adjustment means automatically displacing said milling cutter in response to translation of said slide.

A non-limiting embodiment of the invention will be described by way of example with reference to the accompanying drawings, in which:
Figure 1 shows a view in perspective of a preferred embodiment of the milling machine for machining edges, in particular edges of a conductive bar for an alternator stator, according to the present invention;
Figure 2 shows a cross section of the Figure 1 milling machine;

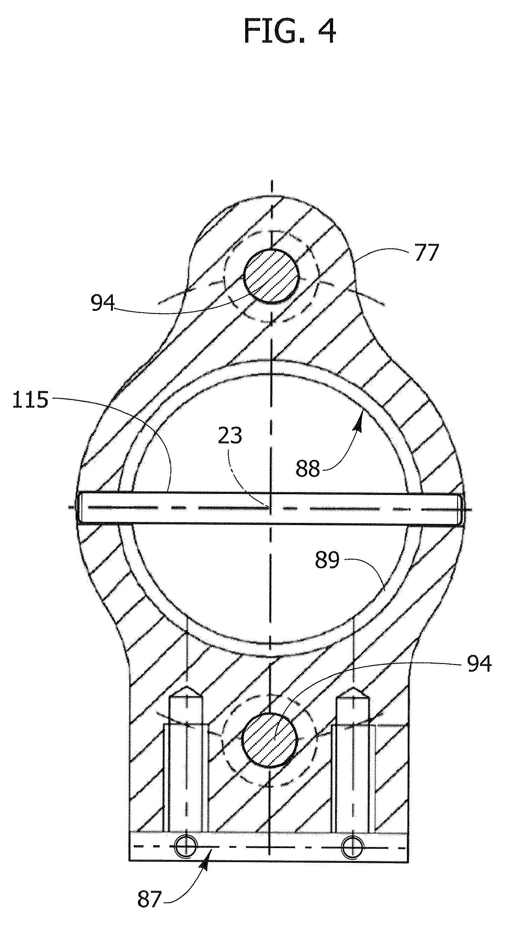

Figures 3 to 5 show larger-scale sections, with parts removed for clarity, along lines III-III, IV-IV and V-V in Figure 2 respectively;
Figure 6 shows a partly sectioned view, with parts removed for clarity, of the Figure 1 milling machine;
Figure 7 shows a section, with parts removed for clarity, along line VII-VII in Figure 6.

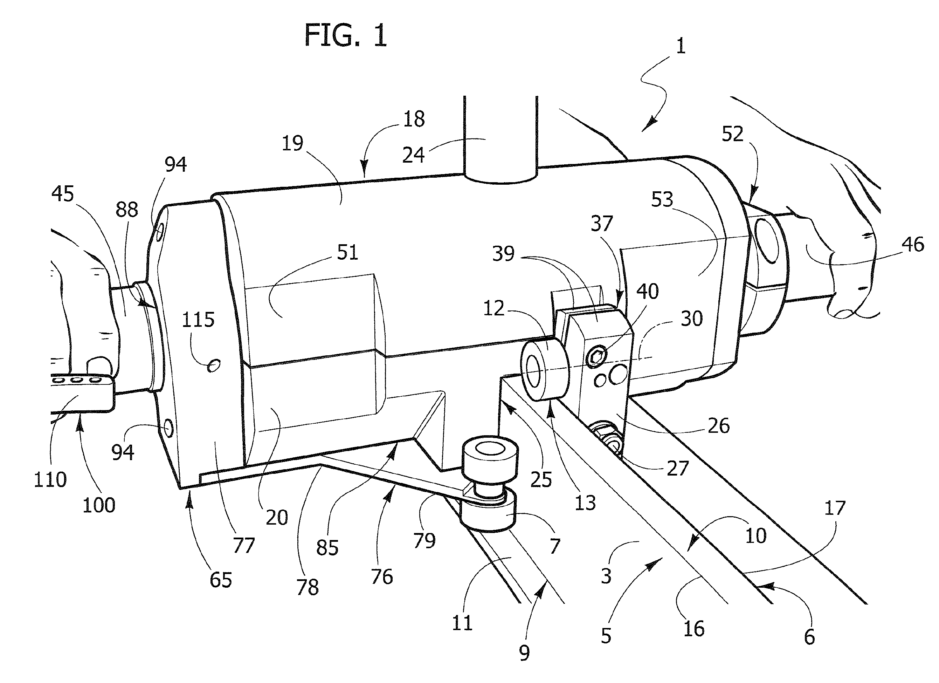

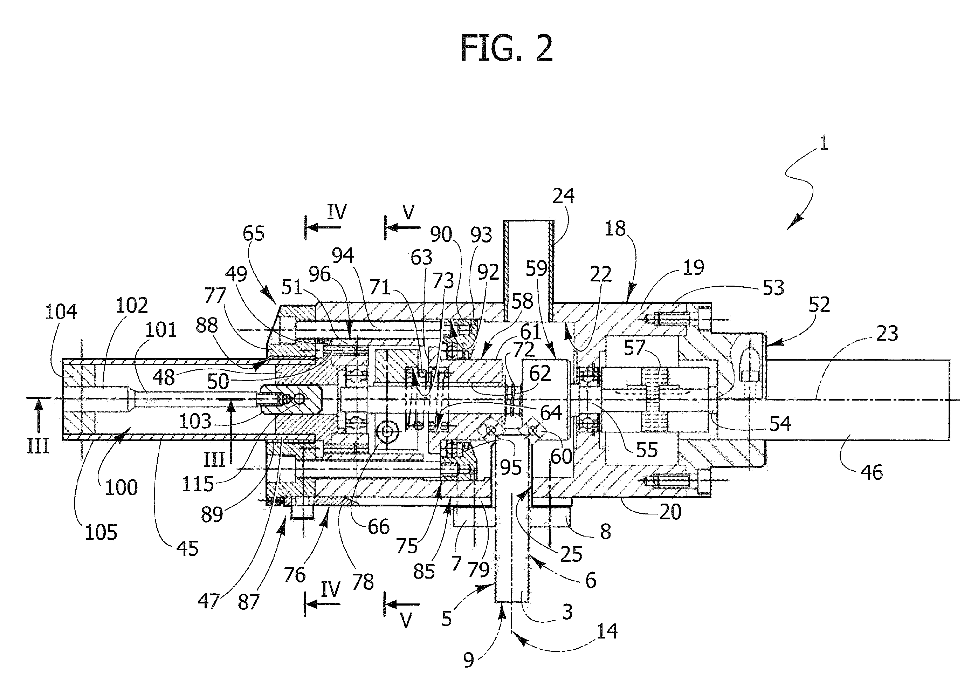

Number 1 in Figures 1 and 2 indicates a milling machine for machining edges, in particular edges of a conductive bar 3 (shown partly) for an alternator stator.

Bar 3 has a rectangular cross section, with the long sides defined by faces 5, 6 resting against respective rollers 7, 8 of milling machine 1, and with the short sides defined by surfaces 9, 10 resting respectively in fixed positions on a supporting base 11 and against two rollers 12 of milling machine 1. Rollers 7, 8, 12 are bearings defining the sides and bottom of a seat 13, which extends along a longitudinal plane 14 coincident with the mid-plane of symmetry of bar 3, and is therefore engaged by the longitudinal edges 16, 17 between surface 10 and faces 5, 6.

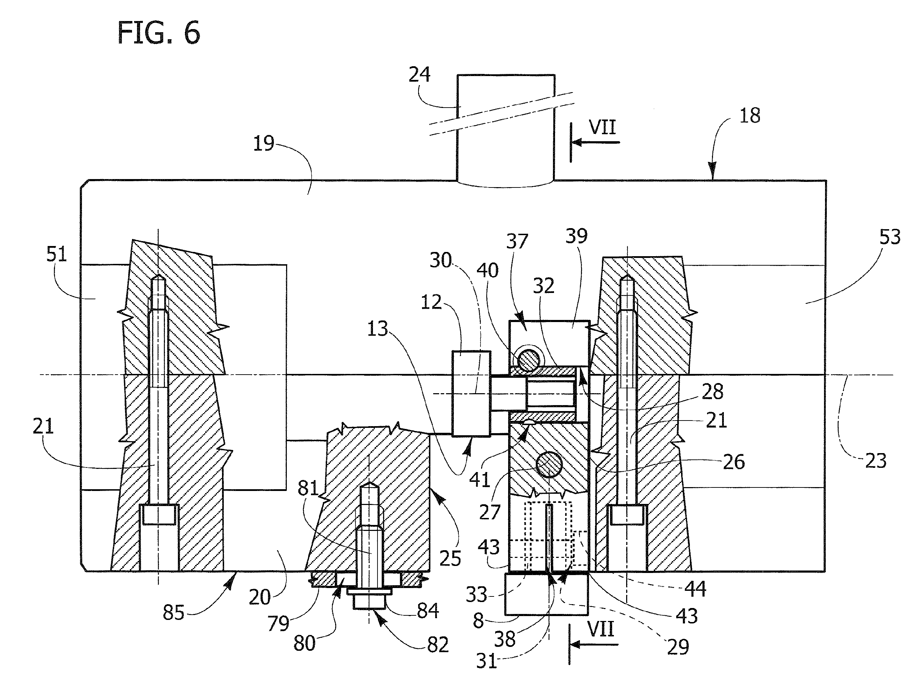

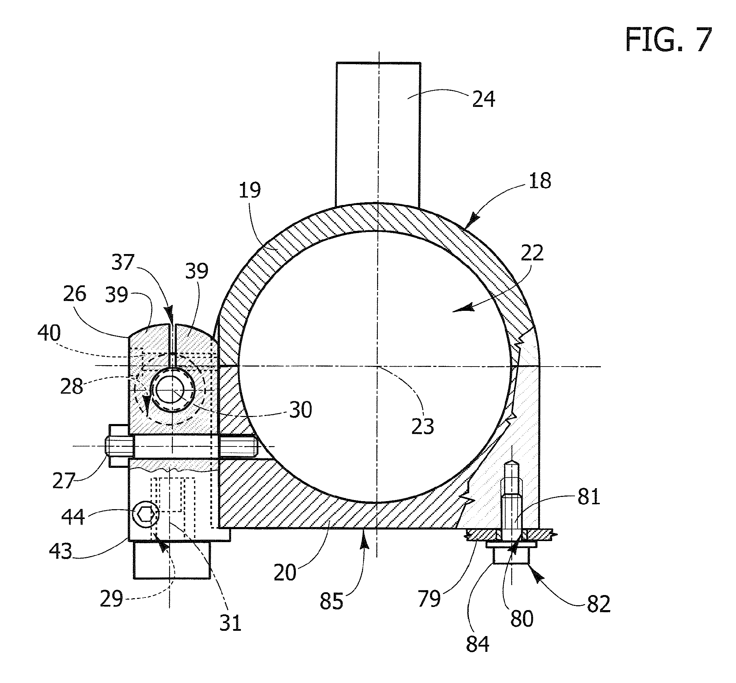

With reference to Figures 6 and 7, milling machine 1 comprises a structure or casing 18 defined by two half-shells 19 and 20, which are fixed together by screws 21 and define a substantially cylindrical inner housing 22 having an axis 23 perpendicular to plane 14. Half-shell 19 supports a fitting 24 connecting housing 22 to a suction system (not shown) for removing waste; and half-shell 20 has a slit 25 that extends along plane 14 about seat 13 to allow edges 16, 17 into housing 22.

Rollers 8 and 12 are connected to half-shell 20 by two blocks 26 located on opposite sides of structure 18 and fixed to half-shell 20 by studs 27 alongside slit 25. Blocks 26 being substantially identical, only one is shown in Figures 1, 6 and 7 and described below.

Block 26 has two cylindrical seats 28, 29 having, respectively, an axis 30 parallel to axis 23, and an axis 31 parallel to plane 14 and perpendicular to axis 30. Seats 28, 29 house respective eccentric cams 32, 33 supporting the rotation pins of rollers 12 and 8 respectively. Block 26 also comprises two slits 37, 38 extending to the outside of block 26 along respective radial planes of respective seats 28, 29.

Slit 37 is parallel to axis 31 and, together with seat 28, separates two elastically deformable portions 39 of block 26. Portions 39 are engaged by a screw 40, which is tangential to axis 30 and draws portions 39 together to grip cam 32 in a fixed position inside seat 28.

Slit 38 is parallel to plane 14 and, together with seat 29, separates two elastically deformable portions 43 of block 26. Like portions 39, portions 43 are engaged by a screw 44, which is tangential to axis 31 and draws portions 43 together to grip cam 33 in a fixed position inside seat 29.

The rotation pins of rollers 12 and 8 are parallel to and eccentric with respect to respective axes 30 and 31, so that, by loosening screws 40, 44 and rotating cams 32, 33 inside seats 28, 29, fine adjustment can be made to : the position of roller 12 in a direction parallel to axis 31, to adjust the position of the bottom of seat 13; and the position of roller 8 in a direction perpendicular to plane 14, to adjust the position of one side of seat 13.

The stems of screws 40, 44 engage respective outer grooves 41 of cams 32, 33 to keep cams 32, 33, and therefore rollers 12, 8, in fixed axial positions when adjusting rollers 12, 8 and until screws 40, 44 are tightened.

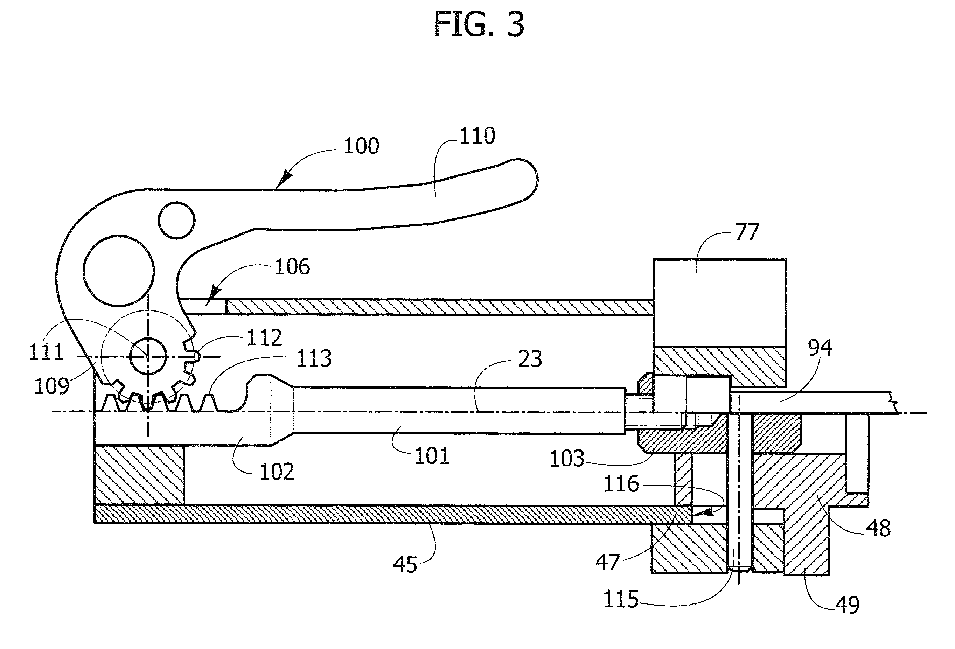

With reference to Figures 2 and 3, at opposite ends, milling machine 1 comprises two cylindrical handgrips 45, 46, which are coaxial along axis 23, and by which to move milling machine 1 manually along surface 10.

Handgrip 45 is defined by a tube comprising an end portion 47 fitted in a fixed position to the axial end of an annular body 48 (Figure 3), which comprises an outer flange 49 fixed by screws 50 to a lateral portion 51 of structure 18.

Handgrip 46 forms part of a motor 52, in particular a pneumatic motor, connected in a manner not described in detail to a lateral portion 53 of structure 18. Motor 52 comprises a drive shaft 54 coaxial, along axis 23, with a shaft 55 housed inside housing 22. Shaft 55 is connected to structure 18 by rolling bearings, and is rotated by shaft 54 by means of an elastic joint 57 housed in portion 53.

Shaft 55 supports two milling cutters 58, 59 housed inside housing 22, on opposite sides of plane 14. Cutter 59 is fixed with respect to shaft 55, e.g. is defined by cutting inserts fixed to a cylindrical supporting portion formed in one piece with shaft 55. Cutter 58, on the other hand, comprises a number of cutting inserts 60; and a supporting sleeve 61 fitted to shaft 55 in axially-movable, angularly-fixed manner, e.g. by means of a key 62. One axial end of sleeve 61 supports inserts 60 in fixed positions; and, at the opposite end, sleeve 61 comprises an externally flanged portion 63 defining a cylindrical axial seat 64.

Milling machine 1 comprises an adjusting assembly 65, which automatically adjusts the position of cutter 58 in response to the position of rollers 7, so as to remove the same amount of material from edge 16, regardless of any variation in the thickness of faces 5, 6, and any errors in the straightness of faces 5, 6.

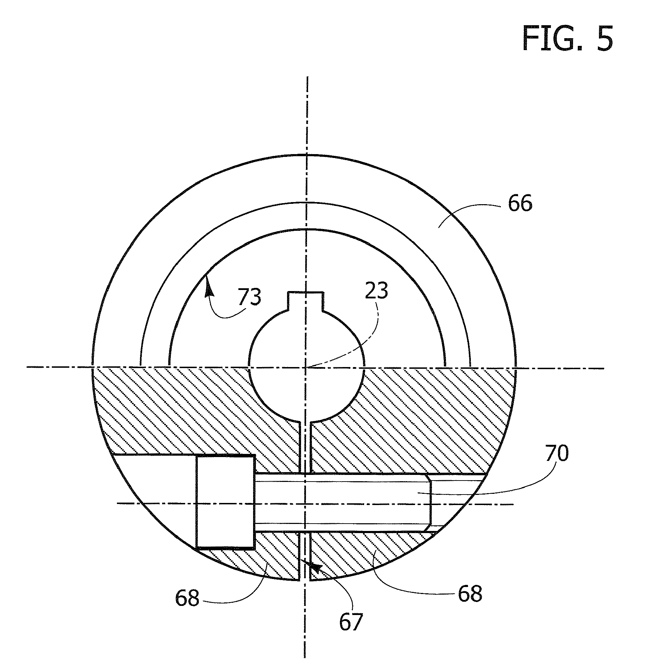

Assembly 65 comprises a shoulder 66 (Figure 5) fitted in angularly-fixed manner to shaft 55 by key 62, and in the form of a split ring, i.e. having a radial slit 67 diametrically opposite the seat of key 62 and separating two facing portions 68. Portions 68 of shoulder 66 are engaged by a screw 70, which is tangential to axis 23 and is tightened to draw portions 68 together and grip shoulder 66 in a fixed axial position to shaft 55.

Assembly 65 also comprises a thrust spring 71 interposed between cutter 58 and shoulder 66; and a positioning spring 72 interposed between cutters 58 and 59. More specifically, springs 71, 72 are helical springs fitted about shaft 55. Spring 71 is centred by engaging seat 64 on one side and, on the other side, a cylindrical axial seat 73 formed in shoulder 66.

Assembly 65 also comprises an axial transmission device 75, which connects rollers 7 to cutter 58 to distance cutter 58 from cutter 59, in opposition to spring 71, by an amount equal to the travel of rollers 7 away from rollers 8.

Device 75 comprises a slide 76 that moves along axis 23 and in turn comprises a supporting body 77 and a plate 78. Plate 78 is flat, is perpendicular to plane 14 and to the rotation axes of rollers 7, 8, and comprises an end portion 79 supporting rollers 7 substantially facing rollers 8 in a direction parallel to axis 23.

Portion 79 has two straight slots 80 parallel to axis 23 and engaged in sliding manner by the stems 81 of respective screws 82. Screws 82 are screwed into half-shell 20 (Figures 6 and 7), and their heads 84 hold portion 79 resting against a flat bottom surface 85 of half-shell 20.

At the opposite end to portion 79, plate 78 is fixed to body 77 by a screw coupling 87, not described in detail, which also allows fine adjustment of the relative position of plate 78 in a direction parallel to axis 23. Body 77 has a circular hole 88 engaged in sliding manner by tube 45 with the interposition of a bushing 89, so that tube 45 acts as a guide for slide 76.

Device 75 also comprises a ring 90, which is located inside housing 22, about an outer cylindrical surface of sleeve 61, and is fitted in sliding manner to an inner surface 92 of structure 18, with the interposition of a seal 93. Ring 90 is fitted to body 77 by two threaded ties 94, and to the flange of portion 63 by a thrust bearing 95. More specifically, ties 94 are screwed inside ring 90, are parallel to axis 23, and slide inside respective guide holes 96 formed in portion 51 about flange 49 of body 48.

When guide seat 13 is not engaged by bar 3, spring 71 pushes cutter 58, and therefore ring 90 with ties 94, towards cutter 59, so that body 76 rests axially against portion 51 and/or flange 49. As of this rest condition, movement of slide 76 away from rollers 8 produces axial pull of ties 94 on ring 90, and therefore axial pull of ring 90 on sleeve 61 of cutter 58 in opposition to spring 71. Before tightening screw 70 when assembling milling machine 1, the axial position of shoulder 66 on shaft 55 can be adjusted to adjust the preload of spring 71 when cutter 58 is in the rest condition.

With reference to Figures 2 and 3, tube 45 is fitted with a manual release device 100 to insert bar 3 between rollers 7 and 8. Device 100 comprises a transmission rod 101 extending along axis 23, housed inside tube 45, and terminating with two pins 102, 103. Pin 102 is guided axially by a split bushing 104 fixed inside a portion 105 of tube 45, at the opposite end to portion 47. Portion 105 and bushing 104 define a radial opening 106 engaged by one end 109 of a lever 110. End 109 is hinged, in a manner not shown in detail, to rotate lever 110 with respect to tube 45 about an axis 111 perpendicular to and skew with respect to axis 23, and has external teeth 112 which mesh with a rack 113 on pin 102 to move rod 101 along axis 23 in response to rotation of lever 110.

Pin 103 is guided axially by an axial hole in body 48, and is fixed to body 77 of slide 76 by a pin 115, which is perpendicular to axis 23 and slides inside two diametrically opposite slots 116 formed, parallel to axis 23, partly in body 48 and partly in portion 47 of tube 45.

To insert bar 3 between rollers 7 and 8, lever 110 is rotated towards the outer surface of tube 45 (clockwise in Figure 3) to pull rod 101 outwards and draw slide 76 away from rollers 8 in opposition to spring 71.

After inserting bar 3 inside seat 13, so that surface 10 is positioned right down against rollers 12, lever 110 is released, and the thrust of spring 71 automatically moves slide 76 to grip bar 3 between rollers 7 and 8. By operating motor 52 and moving milling machine 1 manually along surface 10, cutters 58, 59 remove material from edges 16, 17 to form the desired radius of curvature between faces 5, 6 and surface 10. In other words, when milling, bar 3 acts as a longitudinal guide rail for milling machine 1.

Slide 76 follows the profile of face 5, and so acts as a tracer to move cutter 58 automatically along axis 23, besides keeping bar 3 gripped between rollers 7 and 8 by means of spring 71. In other words, assembly 65 operates according to the position of bearings 7 and, therefore, the profile of face 5 and the thickness of bar 3, so as to adjust the amount of material removed from edge 16.

Once edges 16, 17 are milled, bar 3 is turned over to mill the edges of surface 9.

The advantages of milling machine 1 will be clear from the above description.

In particular, milling quality is excellent and constant for all the bars produced. That is, by virtue of assembly 65, milling machine 1 removes edges 16, 17 by removing the same amount of material at all times, regardless of the thickness of bar 3, so the danger of working down to the copper windings (not shown) inside bar 3 is practically nil.

The relative position between bar 3 and shaft 55 is stable by gripping bar 3 inside seat 13, so milling machine 1 can be moved with no slippage along the rail defined by bar 3. Also, the relative position between bar 3 and cutters 58, 59 can be adjusted easily at the outset by means of cams 32, 33 and by adjusting coupling 87, to calibrate the amount of material to be removed.

Milling machine 1 also provides for milling two edges simultaneously, thus saving time and cost, and can be used on practically any type of bar.

Milling machine 1 is also safe in terms of both manual operation and waste removal by suction.

Clearly, changes may be made to milling machine 1 as described herein without, however, departing from the scope of the present invention as defined in the accompanying Claims.

Rollers 7, 8, 12 may be replaced with other types of bearings or guides to define seat 13.

Milling may be performed in the same way as described above by moving bar 3 longitudinally and keeping milling machine 1 stationary, or by powering longitudinal feed of milling machine 1 along surface 10, and/or by positioning bar 3 otherwise than as shown in Figure 1.

Also, shoulder 66 may be connected to structure 18, as opposed to shaft 55; and/or slide 76 may be designed otherwise than as described by way of example; and/or information about the position of face 5 may be transmitted to cutter 58 by devices other than device 75; and/or the axis of rotation of cutter 58 may be parallel to plane 14, or crosswise at an angle of other than 90°.

## Claims

1. A milling machine (1) for machining edges (16,17), in particular edges of a conductive bar for an alternator stator; the milling machine comprising:
- a structure (18);
- a plurality of bearings (7, 8) defining a guide seat (13), which is engaged, in use, by a workpiece (3) and extends along a longitudinal plane (14);
- a slide (76), which carries at least one of said bearings (7) and is able to slide with respect to said structure (18) along an adjustment axis (23) orthogonal to said longitudinal plane (14);
- elastic means (71) for pushing said slide (76) in a direction such as to grip said workpiece (3) in said guide seat (13) along said adjustment axis (23);
- at least one milling cutter (58), which is carried by said structure (18) and can be actuated by a motor for machining a longitudinal edge (16) of said workpiece (3);
the milling machine being **characterized by** comprising adjustment means (65) automatically displacing said milling cutter (58) in response to translation of said slide (76).

2. The milling machine according to Claim 1, **characterized in that** said milling cutter (58) is fitted on a rotary shaft (55) in an axially slidable and angularly fixed manner.

3. The milling machine according to Claim 2, **characterized in that** said adjustment assembly (65) comprises a shoulder (66) coupled in a fixed position to said rotary shaft (55); and **in that** said elastic means (71) are interposed axially between said milling cutter (58) and said shoulder (66).

4. The milling machine according to Claim 4, **characterized in that** said adjustment means (65) comprise:
- a thrust member (90) coupled to said milling cutter (58) via a thrust bearing (95); and
- at least one tierod (94), which couples said thrust member (90) to said slide (76) for transmitting a motion of the slide (76) to the milling cutter (58) against the action of said elastic means (71).

5. The milling machine according to any one of the preceding claims, **characterized in that** said milling cutter (58) is slidable along an axis parallel to said adjustment axis (23).

6. The milling machine according to Claim 5, **characterized by** comprising an axially movable milling cutter (58) and an axially fixed milling cutter (59), which are coaxial, are arranged on opposite sides of said longitudinal plane (14), and are actuated by one and the same rotary shaft (55).

7. The milling machine according to Claim 5 or Claim 6, **characterized by** comprising two coaxial handgrips (45, 46); one of said handgrips (46) forming part of a motor (52) that actuates said milling cutter (58).

8. The milling machine according to any one of the preceding claims, **characterized by** comprising:
- at least one eccentric cam (32), which supports one of said bearings (12) and is able to rotate in a corresponding cylindrical seat (28) for varying the position of the bearing (12) with respect to said structure (18); and
- releasable retention means (39, 40) for withholding said eccentric cam (32) in a fixed position in said cylindrical seat (28).

9. The milling machine according to Claim 8, **characterized in that** said releasable retention means (39, 40) comprise:
- two retention portions (39) facing one another and separated by said cylindrical seat (28) and by a slit (37), which extends radially from said cylindrical seat (28); and
- a screw (40) tangential with respect to the axis of said cylindrical seat (28) and engaging said retention portions (39).

10. The milling machine according to Claim 9, **characterized in that** said eccentric cam (32) comprises an external groove (41) engaged by a stem of the screw (40) for withholding said eccentric cam (32) along the axis of the cylindrical seat (28).
